# EUROPEAN PATENT APPLICATION

(11) **EP 4 207 420 A1**
(43) Date of publication of application: **05.07.2023**
(21) Application number: 22798230.3
(22) Date of filing: 29.08.2022
(51) Int. Cl.: H01M 10/054

(54) **AIR-STABLE LAYERED CHROMIUM-BASED POSITIVE ELECTRODE MATERIAL, PREPARATION METHOD THEREFOR, AND SODIUM-ION BATTERY**

(30) Priority: 11.11.2021 CN 202111333125
(71) Applicant: Hengdian Group DMEGC Magnetics Co., Ltd., Jinhua, Zhejiang 322118 (CN)
(72) Inventor: XI, Kaiying, Jinhua Zhejiang 322118 (CN); ZENG, Zihan, Jinhua Zhejiang 322118 (CN); ZHANG, Shenghui, Jinhua Zhejiang 322118 (CN)
(74) Representative: De Bonis, Paolo
(86) International application number: PCT/CN2022/115348
(87) International publication number: WO 2023/082777

(57) **Abstract**

Provided are an air-stable layered chromium-based positive electrode material, a preparation method thereof and a sodium-ion battery. The air-stable layered chromium-based positive electrode material exhibits an O3-phase and has a chemical formula of Na_{y}Cr₁₋ₓMₓO₂, wherein M is a metal ion with non-electrochemical activity and ion radius larger than Cr ion, and 0.1≤x≤0.3, 0.7≤y≤0.9; the preparation method comprises the following steps: (1) weighing and mixing a sodium salt, a chromium oxide and a doped metal oxide according to a stoichiometric ratio, grinding the mixed material and tabletting to obtain an intermediate material; and (2) roasting the intermediate material obtained in step (1) to obtain the air-stable layered chromium-based positive electrode material. The positive electrode material provided by the present application has excellent air stability and meets the energy density requirement of sodium-ion batteries, and the preparation method simplifies the process flow and reduces the production cost.

## Description

### TECHNICAL FIELD

The present application belongs to the technical field of sodium-ion batteries, and relates to a chromium-based positive electrode material, and in particular to an air-stable layered chromium-based positive electrode material, a preparation method thereof and a sodium-ion battery.

### BACKGROUND

With the continuous consumption of energy, energy shortage and environmental pollution have become global problems, compelling scientists from all over the world to focus on developing clean and sustainable energy. As a convenient and effective modem energy storage device, the lithium-ion battery has penetrated every aspect of lives. However, the shortage of lithium resources and the increase of cost still plague researchers. Therefore, the sodium-ion battery can be a favorable alternative to lithium ion battery in large-scale energy storage applications.

At present, among the positive electrode materials of sodium-ion batteries, the transition metal layered oxide NaₓTMO₂ (TM is the transition metal element) has become a hot research object due to its high energy density and simple preparation. However, there are some problems in layered oxide positive electrode materials. Most O3-phase layered oxide positive electrode materials are unstable in the air, and can absorb water easily or chemically react with water, oxygen and carbon dioxide. After the preparation, the positive electrode materials need to be stored in inert gas, which require strict storage conditions, seriously challenging the popularization and application of sodium-ion batteries.

CN111244415A discloses an air-stable layered transition metal oxide positive electrode material and a sodium-ion battery thereof. The layered transition metal oxide positive electrode material exhibits the P2/O3 multi-phase, and the chemical formula is Na₁₋ₓLiₓ (Mn_{0.67}Ni_{0.33-y}Fe_{y})₁₋ₓO₂, wherein 0<x≤0.2, 0≤y≤0.2. According to the invention, the structure of the layered oxide positive electrode material can be stabilized by replacing or doping metal elements. After soaked in water for 12 h and dried, and the structure of the layered oxide positive electrode material remains unchanged. However, it is the P2 phase structure that plays a role in stabilizing the structure, and O3-phase materials is not used to improve air stability in the invention.

CN111186861A discloses a layered chromium-based positive electrode material for sodium-ion batteries and a preparation method thereof. In the invention, a sodium salt, a chromium compound and a tin compound are used as precursors to synthesize a novel chromium-based layered oxide positive electrode material, which has good stability in air. However, the specific discharge capacity of the positive electrode material at 1C rate is only 70 mAh/g, which cannot meet the energy density requirement of sodium-ion batteries in practical application.

CN112838206A discloses a layered oxide positive electrode material with excellent air stability and a method for improving the air stability by adjusting a sodium content. The layered oxide positive electrode material exhibits an O3-phase, and the chemical formula is NaₓMeO₂, wherein Me includes at least one or more elements of Li, Ni, Fe, Co and Mn, and 0.93≤x≤0.95. The layered oxide positive electrode material is exposed to air for 2 days, and it is found that reducing the Na content between layers can effectively inhibit the generation of new phase after air exposure. However, the positive electrode material in the invention is only exposed in the air for 2 days, which is too short, and the air stability improvement effect is not obvious.

Therefore, it has been an urgent problem to be solved by those skilled in the art about how to provide an O3-phase layered chromium-based positive electrode material and a preparation method thereof, improve the air stability, meet the energy density requirements of sodium-ion batteries, simplify the process flow and reduce the production cost.

### SUMMARY

The following is a summary of the subject described in detail in the present disclosure. This summary is not intended to limit the protection scope of the claims.

The present application is to provide an air-stable layered chromium-based positive electrode material, a preparation method thereof and a sodium-ion battery. The positive electrode material has good stability in air and meets the energy density requirements of sodium-ion batteries, and the preparation method simplifies the process flow and reduces the production cost.

To achieve the object, the present application adopts the technical solutions below.

In a first aspect, the present application provides an air-stable layered chromium-based positive electrode material, which exhibits an O3-phase and has a chemical formula of Na_{y}Cr₁₋ₓMₓO₂, wherein M is a metal ion with non-electrochemical activity and ion radius larger than Cr ion, and 0.1≤x≤0.3, 0.7<y≤0.9.

In the present application, 0.1≤x≤0.3, and for example, x may be 0.1, 0.12, 0.14, 0.16, 0.18, 0.2, 0.22, 0.24, 0.26, 0.28 or 0.3, but it is not limited to the listed values, and other unlisted values within this range are also applicable.

In the present application, 0.7<y≤0.9, and for example, y may be 0.7, 0.72, 0.74, 0.76, 0.78, 0.8, 0.82, 0.84, 0.86, 0.88 or 0.9, but it is not limited to the listed values, and other unlisted values within this range are also applicable.

In the present application, the metal ion with non-electrochemical activity and ion radius larger than Cr ion is introduced into the transition metal layer in situ to form the O3-phase positive electrode material, various transition metal cations exert a synergistic effect in the layered structure, and effectively improve the structural stability of the layered oxide positive electrode material, and the positive electrode material will not suffer from structural distortion after being exposed to the atmospheric environment for one month, thus improving the electrochemical performance of the battery. The positive electrode material can maintain excellent structural stability in the air environment, which lays a good foundation for the low-cost, environment-friendly and room-temperature sodium-ion energy storage battery.

Optionally, the M includes any one or a combination of at least two of Ru, Nb or Zr, and a typical but non-limiting combination includes a combination of Ru and Nb, a combination of Nb and Zr, a combination of Ru and Zr, or a combination of Ru, Nb and Zr, and further preferably Ru.

Optionally, the air-stable layered chromium-based positive electrode material has a chemical formula of Na_{y}Cr₁₋ₓRuₓO₂, wherein 0.1≤x≤0.2, and for example, x may be 0.1, 0.11, 0.12, 0.13, 0.14, 0.15, 0.16, 0.17, 0.18, 0.19 or 0.2; 0.8≤y≤0.9, and for example, y may be 0.8, 0.81, 0.82, 0.83, 0.84, 0.85, 0.86, 0.87, 0.88, 0.89 or 0.9, but x or y is not limited to the listed values, and other unlisted values within the ranges are also applicable; and further preferably Na_{0.9}Cr_{0.9}Ru_{0.1}O₂.

Optionally, the air-stable layered chromium-based positive electrode material has a hexagonal crystal structure, and exhibits a granular morphology with an average particle size of 0.5-10 µm, such as 0.5 µm, 1 µm, 2 µm, 3 µm, 4 µm, 5 µm, 6 µm, 7 µm, 8 µm, 9 µm or 10 µm, but the average particle size is not limited to the listed values, and other unlisted values within this range are also applicable.

In a second aspect, the present application provides a preparation method of the air-stable layered chromium-based positive electrode material according to the first aspect, which includes the following steps
(1) weighing and mixing a sodium salt, a chromium oxide and a doped metal oxide according to a stoichiometric ratio, grinding the mixed material and tabletting to obtain an intermediate material;
(2) roasting the intermediate material obtained in step (1) to obtain the air-stable layered chromium-based positive electrode material.

In the present application, a solid-phase sintering method is adopted, a layered oxide is formed by controlling the reaction conditions and has no structural phase change in the air environment, and the precursor substances diffuse into each other at a high temperature during the roasting process, allowing the microscopic discrete particles to form a continuous solid layered structure gradually, thus obtaining a stable sodium-containing layered oxide material with hexagonal R3m space group structure. In addition, the preparation method has a simple process and reduces the production cost.

Optionally, the sodium salt in step (1) includes any one or a combination of at least two of Na₂CO₃, NaHCO₃ or NaCl, and a typical but non-limiting combination includes a combination of Na₂CO₃ and NaHCO₃, a combination of NaHCO₃ and NaCl, a combination of Na₂CO₃ and NaCl, or a combination of Na₂CO₃, NaHCO₃ and NaCl.

Optionally, the chromium oxide in step (1) includes Cr₂O₃ and/or CrO₂.

Optionally, the doped metal oxide in step (1) includes any one or a combination of at least two of RuO₂, Nb₂O₄ or ZrO₂, and a typical but non-limiting combination includes a combination of RuOz and Nb₂O₄, a combination of Nb₂O₄ and ZrOz, a combination of RuOz and ZrO₂, or a combination of RuO₂, Nb₂O₄ and ZrO₂.

Optionally, the grinding in step (1) is ball milling.

Optionally, a total mass of grinding balls used in the ball milling is 3-5 times of a total mass of the mixed material, such as 3 times, 3.2 times, 3.4 times, 3.6 times, 3.8 times, 4 times, 4.2 times, 4.4 times, 4.6 times, 4.8 times or 5 times, but the total mass is not limited to the listed values, and other unlisted values within this range are also applicable.

Optionally, the ball milling has a speed of 100-300 rpm, such as 100 rpm, 120 rpm, 140 rpm, 160 rpm, 180 rpm, 200 rpm, 220 rpm, 240 rpm, 260 rpm, 280 rpm or 300 rpm, but the speed is not limited to the listed values, and other unlisted values within this range are also applicable.

Optionally, the ball milling has a time of 5-10 h, such as 5 h, 5.5 h, 6 h, 6.5 h, 7 h, 7.5 h, 8 h, 8.5 h, 9 h, 9.5 h or 10 h, but the time is not limited to the listed values, and other unlisted values within this range are also applicable.

Optionally, the tabletting in step (1) has a pressure of 5-10 MPa, such as 5 MPa, 5.5 MPa, 6 MPa, 6.5 MPa, 7 MPa, 7.5 MPa, 8 MPa, 8.5 MPa, 9 MPa, 9.5 MPa or 10 MPa, but the pressure is not limited to the listed values, and other unlisted values within this range are also applicable.

Optionally, the roasting in step (2) has a temperature of 700-1000°C, such as 700°C, 750°C, 800°C, 850°C, 900°C, 950°C or 1000°C, but the temperature is not limited to the listed values, and other unlisted values within this range are also applicable.

Optionally, the roasting in step (2) has a heating rate of 1-10°C/min, such as 1°C/min, 2°C/min, 3°C/min, 4°C/min, 5°C/min, 6°C/min, 7°C/min, 8°C/min, 9°C/min or 10°C/min, but the heating rate is not limited to the listed values, and other unlisted values within this range are also applicable.

Optionally, the roasting in step (2) has a time of 7-15 h, such as 7 h, 8 h, 9 h, 10 h, 11 h, 12 h, 13 h, 14 h or 15 h, but the time is not limited to the listed values, and other unlisted values within this range are also applicable.

Optionally, the roasting in step (2) is carried out in an atmosphere of argon, nitrogen or helium.

Optionally, the roasting in step (2) is repeated for 2-3 times, and after each roasting, the mixed material is cooled in the furnace, ground and tabletted again.

As a preferred technical solution of the second aspect of the present application, the preparation method includes the following steps:
(1) weighing and mixing a sodium salt, a chromium oxide and a doped metal oxide according to a stoichiometric ratio, ball milling and tabletting to obtain an intermediate material; the sodium salt includes any one or a combination of at least two of Na₂CO₃, NaHCO₃ or NaCl, the chromium oxide includes Cr₂O₃ and/or CrO₂, and the doped metal oxide includes any one or a combination of at least two of RuO₂, Nb₂O₄ or ZrO₂; a total mass of grinding balls used in the ball milling is 3-5 times of a total mass of the mixed material, and the ball milling has a speed of 100-300 rpm and a time of 5-10 h; the tabletting has a pressure of 5-10 MPa;
(2) roasting the intermediate material obtained in step (1) at 700-1000°C for 7-15 h at a heating rate of 1-10°C/min in an atmosphere of argon, nitrogen or helium to obtain the air-stable layered chromium-based positive electrode material; the roasting is repeated for 2-3 times, and after each roasting, the mixed material is cooled in the furnace, ground and tabletted again.

In a third aspect, the present application provides a sodium-ion battery, which has a positive electrode material of the air-stable layered chromium-based positive electrode material according to the first aspect.

Because of adopting the specific air-stable layered chromium-based positive electrode material, the sodium-ion battery provided by the present application has a highly reversible charging-discharging process, and has the characteristics of high specific capacity, strong symmetry and excellent battery performance. The sodium-ion battery shows high energy density, and the specific discharge capacity of the first cycle is as high as 156 mAh/g at a rate of 50 mA/g and a voltage of 1.5-3.8 V After three charge-discharge tests, the charge-discharge curves of the sodium-ion battery basically coincide and show strong symmetry, which means that the method doping inert transition metal ions has a good application prospect in optimizing the performance of sodium-ion battery energy storage devices.

Compared with the prior art, the present application has the following beneficial effects.
(1) In the present application, the metal ion with non-electrochemical activity and ion radius larger than Cr ion is introduced into the transition metal layer in situ to form the O3-phase positive electrode material, various transition metal cations exert a synergistic effect in the layered structure, and effectively improve the structural stability of the layered oxide positive electrode material, and the positive electrode material will not suffer from structural distortion after being exposed to the atmospheric environment for one month, thus improving the electrochemical performance of the battery; the positive electrode material can maintain excellent structural stability in the air environment, which lays a good foundation for the low-cost, environment-friendly and room-temperature sodium-ion energy storage battery.
(2) In the present application, a solid-phase sintering method is adopted, a layered oxide is formed by controlling the reaction conditions and has no structural phase change in the air environment, and the precursor substances diffuse into each other at a high temperature during the roasting process, allowing the microscopic discrete particles to form a continuous solid layered structure gradually, thus obtaining a stable sodium-containing layered oxide material with hexagonal R3m space group structure; in addition, the preparation method has a simple process and reduces the production cost.
(3) Because of adopting the specific air-stable layered chromium-based positive electrode material, the sodium-ion battery provided by the present application has a highly reversible charging-discharging process, and has the characteristics of high specific capacity, strong symmetry and excellent battery performance; the sodium-ion battery shows high energy density, and the specific discharge capacity of the first cycle is as high as 156 mAh/g at a rate of 50 mA/g and a voltage of 1.5-3.8 V; after three charge-discharge tests, the charge-discharge curves of the sodium-ion battery basically coincide and show strong symmetry, which means that the method doping inert transition metal ions has a good application prospect in optimizing the performance of sodium-ion battery energy storage devices.

Other aspects can be understood after reading and understanding the detailed description.

### BRIEF DESCRIPTION OF DRAWINGS

FIG. 1 is an X-ray powder diffraction pattern of the positive electrode material obtained in Example 1.
FIG. 2 is a scanning electron microscope image of the positive electrode material obtained in Example 1.
FIG. 3 is a transmission electron microscope image of the positive electrode material obtained in Example 1.
FIG. 4 is an electron energy loss element distribution mapping of the positive electrode material obtained in Example 1.
FIG. 5 is a charge-discharge curves graph of the sodium-ion battery obtained in Example 1.
FIG. 6 is an X-ray powder diffraction pattern comparison of the positive electrode material obtained in Example 1 before and after being exposed to air for one month.

### DETAILED DESCRIPTION

Technical solutions of the present application will be further described below through embodiments. It should be apparent to those skilled in the art that the embodiments are only used for a better understand of the present application, and should not be regarded as a specific limitation of the present application.

### Example 1

This example provides an air-stable layered chromium-based positive electrode material and a preparation method thereof, and the preparation method includes the following steps:
(1) according to a molar ratio of 9:9:2, corresponding mass of Na₂CO₃, Cr₂O₃ and RuO₂ were weighed out and added into an agate ball milling tank, then grinding balls were added with a total mass 4 times of a total mass of the mixed material, and the precursor material was subjected to ball milling at a speed of 300 rpm for 5 h to be mixed uniformly;
(2) the ball-milled mixed material was pressed into a round tablet with a diameter of 16 mm under a pressure of 10 MPa; and
(3) the tablet sample obtained in step (2) was placed into a tubular furnace, heated to 750°C at a rate of 2°C/min in an argon atmosphere, roasted for 2 h, cooled to room temperature in the furnace, ground into powder, and tabletted at a pressure of 10 MPa again, and the tablet was heated to 900°C at a rate of 7°C/min in an argon atmosphere, and roasted for 3 h; the above treatment step was repeated, and finally, the tablet was heated to 1000°C at a rate of 7°C/min in an argon atmosphere, roasted for 2 h, and cooled to room temperature in the furnace to obtain the air-stable layered chromium-based positive electrode material with a chemical formula of Na_{0.9}Cr_{0.9}Ru_{0.1}O₂.

The positive electrode material obtained in this example was subjected to a series of characterization tests.

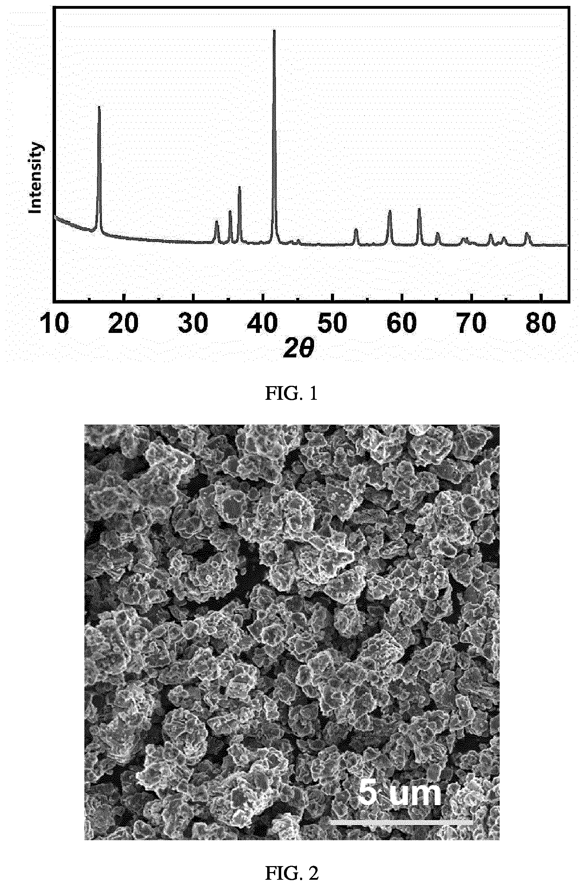

FIG. 1 is an X-ray powder diffraction pattern of the obtained positive electrode material. The diffraction peaks are obvious and have high intensity, indicating that the sample has good crystallinity, and there are characteristic peaks of hexagonal R3m space group, indicating that the sample has a layered structure.

FIG. 2 is a scanning electron microscope image of the obtained positive electrode material, which shows that the material has a layered granular structure, and the particles have an average particle size of 0.8 µm.

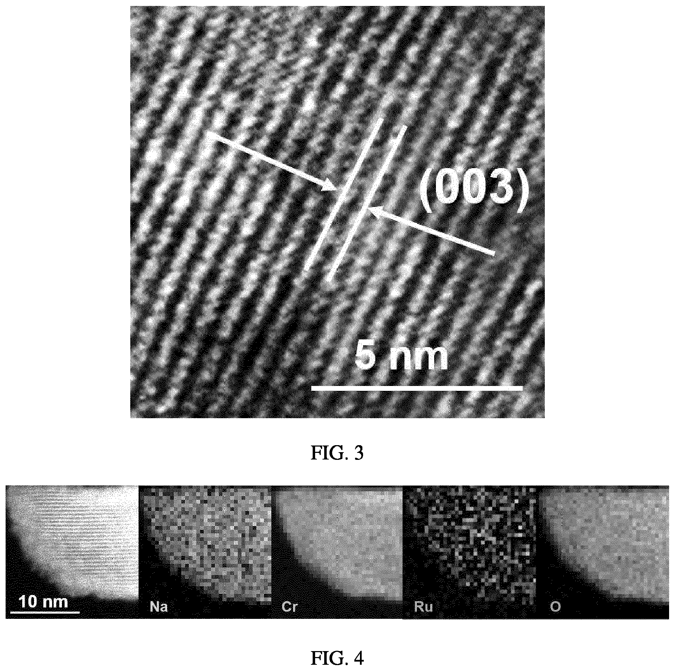

FIG. 3 is a transmission electron microscope image of the obtained positive electrode material, which shows that the material has clear lattice stripes corresponding to the (003) crystal plane.

FIG. 4 is an electron energy loss element distribution mapping of the obtained positive electrode material, which shows that four elements of Na, Cr, Ru and O are uniformly distributed in the material.

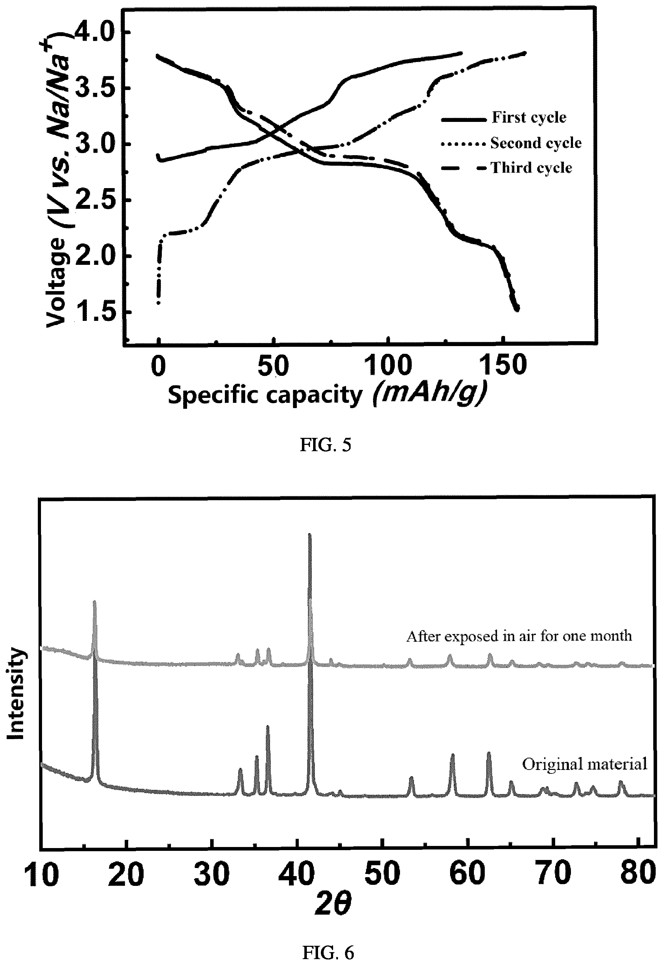

The electrochemical performance test method of the positive electrode material obtained in this example includes the following steps:
(A) the positive electrode material, acetylene black and polyvinylidene fluoride were mixed according to a mass ratio of 7:2:1, added with solvent N-methylpyrrolidone, and uniformly coated on an aluminum foil, and after slurry preparing, coating, drying and other processes, a composite positive electrode was obtained, and carved into a round tablet with a diameter of 12 mm by a tablet press; and
(B) with the electrode sheet obtained in step (A) as a positive electrode, metallic sodium as a negative electrode, glass fiber filter paper as a separator, and 1 M NaPF₆ solution (dissolved in the mixed solution of PC with 5wt% FEC) as an electrolyte, a button battery was assembled in a glove box filled with argon, and then the button battery was subjected to charge-discharge test within a voltage range of 1.5-3.8 V using Land BT 2001A battery test system, and the charge-discharge curves were obtained as shown in FIG. 5.

It can be seen from FIG. 5 that the sodium-ion battery prepared by using the positive electrode material obtained in this example shows high energy density, and the specific discharge capacity of the first cycle is as high as 156 mAh/g at a rate of 50 mA/g and a voltage of 1.5-3.8 V; after three charge-discharge tests, the charge-discharge curves of the obtained sodium-ion battery basically coincide and show strong symmetry, which mean that the charge-discharge process of the obtained sodium-ion battery is highly reversible.

After exposed to air for one month, the positive electrode material obtained in this example was then subjected to XRD test. FIG. 6 is XRD pattern comparison of the positive electrode material obtained in this example before and after being exposed to air for one month. It can be seen from FIG. 6 that there is no obvious change in the two curves, which indicates that the phase of the positive electrode material obtained in this example has not changed after being exposed to air for two weeks, and further indicates that the obtained positive electrode material has good stability in the air environment, which lays a good foundation for the practical application of sodium-ion batteries.

### Example 2

This example provides an air-stable layered chromium-based positive electrode material and a preparation method thereof. In the preparation method, except for step (1) of weighing Na₂CO₃, Cr₂O₃ and RuO₂ with corresponding mass according to a molar ratio of 8:8:4, other steps and conditions are the same as those of Example 1, so the details are not repeated here.

The positive electrode material obtained in this example has a chemical formula of Na_{0.8}Cr_{0.8}Ru_{0.2}O₂.

### Example 3

This example provides an air-stable layered chromium-based positive electrode material and a preparation method thereof. In the preparation method, except for step (1) of weighing Na₂CO₃, Cr₂O₃ and RuO₂ with corresponding mass according to a molar ratio of 8.5:8.5:3, other steps and conditions are the same as those of Example 1, so the details are not repeated here.

The positive electrode material obtained in this example has a chemical formula of Na_{0.85}Cr_{0.85}Ru_{0.15}O₂.

### Example 4

This example provides an air-stable layered chromium-based positive electrode material and a preparation method thereof. In the preparation method, except for step (1) of weighing Na₂CO₃, Cr₂O₃ and RuO₂ with corresponding mass according to a molar ratio of 7:7:6, other steps and conditions are the same as those of Example 1, so the details are not repeated here.

The positive electrode material obtained in this example has a chemical formula of Na_{0.7}Cr_{0.7}Ru_{0.3}O₂.

### Example 5

This example provides an air-stable layered chromium-based positive electrode material and a preparation method thereof. In the preparation method, except for replacing RuO₂ with ZrO₂ with equal molar amount in step (1), other steps and conditions are the same as those of Example 1, so the details are not repeated here.

The positive electrode material obtained in this example has a chemical formula of Na_{0.9}Cr_{0.9}Zr_{0.1}O₂.

### Example 6

This example provides an air-stable layered chromium-based positive electrode material and a preparation method thereof. In the preparation method, except for replacing RuO₂ with NbO₂ with equal molar amount in step (1), other steps and conditions are the same as those of Example 1, so the details are not repeated here.

The positive electrode material obtained in this example has a chemical formula of Na_{0.9}Cr_{0.9}Nb_{0.1}O₂.

### Example 7

This example provides an air-stable layered chromium-based positive electrode material and a preparation method thereof. In the preparation method, except for replacing Na₂CO₃ with NaCl with two times molar amount in step (1), other steps and conditions are the same as those of Example 1, so the details are not repeated here.

The positive electrode material obtained in this example has a chemical formula of Na_{0.9}Cr_{0.9}Ru_{0.1}O₂.

### Example 8

This example provides an air-stable layered chromium-based positive electrode material and a preparation method thereof. In the preparation method, except for replacing Na₂CO₃ with NaHCO₃ with two times molar amount in step (1), other steps and conditions are the same as those of Example 1, so the details are not repeated here.

The positive electrode material obtained in this example has a chemical formula of Na_{0.9}Cr_{0.9}Ru_{0.1}O₂.

### Example 9

This example provides an air-stable layered chromium-based positive electrode material and a preparation method thereof. In the preparation method, except for replacing Cr₂O₃ with CrO₂ with two times molar amount in step (1), other steps and conditions are the same as those of Example 1, so the details are not repeated here.

The positive electrode material obtained in this example has a chemical formula of Na_{0.9}Cr_{0.9}Ru_{0.1}O₂.

### Example 10

This example provides an air-stable layered chromium-based positive electrode material and a preparation method thereof. In the preparation method, except for replacing the argon atmosphere with a nitrogen atmosphere in step (3), other steps and conditions are the same as those of Example 1, so the details are not repeated here.

The positive electrode material obtained in this example has a chemical formula of Na_{0.9}Cr_{0.9}Ru_{0.1}O₂.

### Example 11

This example provides an air-stable layered chromium-based positive electrode material and a preparation method thereof. In the preparation method, except for replacing the argon atmosphere with a helium atmosphere in step (3), other steps and conditions are the same as those of Example 1, so the details are not repeated here.

The positive electrode material obtained in this example has a chemical formula of Na_{0.9}Cr_{0.9}Ru_{0.1}O₂.

The characterization results of the positive electrode materials obtained in Examples 2-11 are similar to those in Example 1, and there is no obvious difference, so the details are not repeated here.

### Comparative Example 1

This comparative example provides a chromium-based positive electrode material and a preparation method thereof. In the preparation method, except for adding no RuO₂ but more Na₂CO₃ and Cr₂O₃, the extra molar amount of which are both equal to a half of RuO₂ in step (1), the other steps and conditions are the same as those in Example 1, so the details are not repeated here.

The positive electrode material obtained in this comparative example has a chemical formula of Na_{0.95}Cr_{0.95}O₂.

Compared with Example 1, this comparative example is not doped with inert transition metal ions, which leads to a poor structural stability of the obtained positive electrode material than Example 1, and the positive electrode material has structural distortion after being exposed to the atmospheric environment for one month, which thus will reduce the electrochemical performance of the battery.

Therefore, the metal ion with non-electrochemical activity and ion radius larger than Cr ion is introduced into the transition metal layer in situ to form the O3-phase positive electrode material in the present application, various transition metal cations exert a synergistic effect in the layered structure, and effectively improve the structural stability of the layered oxide positive electrode material, and the positive electrode material will not suffer from structural distortion after being exposed to the atmospheric environment for one month, thus improving the electrochemical performance of the battery; the positive electrode material can maintain excellent structural stability in the air environment, which lays a good foundation for the low-cost, environment-friendly and room-temperature sodium-ion energy storage battery; a solid-phase sintering method is adopted in the present application, a layered oxide is formed by controlling the reaction conditions and has no structural phase change in the air environment, and the precursor substances diffuse into each other at a high temperature during the roasting process, allowing the microscopic discrete particles to form a continuous solid layered structure gradually, thus obtaining a stable sodium-containing layered oxide material with hexagonal R3m space group structure; in addition, the preparation method has a simple process and reduces the production cost; because of adopting the specific air-stable layered chromium-based positive electrode material, the sodium-ion battery provided by the present application has a highly reversible charging-discharging process, and has the characteristics of high specific capacity, strong symmetry and excellent battery performance; the sodium-ion battery shows high energy density, and the specific discharge capacity of the first cycle is as high as 156 mAh/g at a rate of 50 mA/g and a voltage of 1.5-3.8 V; after three charge-discharge tests, the charge-discharge curves of the sodium-ion battery basically coincide and show strong symmetry, which means that the method doping inert transition metal ions has a good application prospect in optimizing the performance of sodium-ion battery energy storage devices.

The applicant has stated that although the embodiments of the present application are described above, the protection scope of the present application is not limited to the embodiments. It should be apparent to those skilled in the art that any changes or substitutions within the technical scope disclosed in the present application, which are obvious to those skilled in the art, all fall within the protection scope and disclosure scope of the present application.

## Claims

1. An air-stable layered chromium-based positive electrode material, which exhibits an O3-phase and has a chemical formula of Na_{y}Cr₁₋ₓMₓO₂, wherein M is a metal ion with non-electrochemical activity and ion radius larger than Cr ion, and 0.1≤x≤0.3, 0.7≤y≤0.9.

2. The air-stable layered chromium-based positive electrode material according to claim 1, wherein the M comprises any one or a combination of at least two of Ru, Nb or Zr, further preferably Ru.

3. The air-stable layered chromium-based positive electrode material according to claim 1 or 2, wherein the air-stable layered chromium-based positive electrode material has a chemical formula of Na_{y}Cr₁₋ₓRuₓO₂, wherein 0.1≤x≤0.2, 0.8≤y≤0.9, further preferably Na_{0.9}Cr_{0.9}Ru_{0.1}O₂.

4. The air-stable layered chromium-based positive electrode material according to any one of claims 1 to 3, wherein the air-stable layered chromium-based positive electrode material has a hexagonal crystal structure, and exhibits a granular morphology with an average particle size of 0.5-10 µm.

5. A preparation method of the air-stable layered chromium-based positive electrode material according to any one of claims 1 to 4, comprising the following steps:
(1) weighing and mixing a sodium salt, a chromium oxide and a doped metal oxide according to a stoichiometric ratio, grinding the mixed material and tabletting to obtain an intermediate material;
(2) roasting the intermediate material obtained in step (1) to obtain the air-stable layered chromium-based positive electrode material.

6. The preparation method according to claim 5, wherein the sodium salt in step (1) comprises any one or a combination of at least two of Na₂CO₃, NaHCO₃ or NaCl;
optionally, the chromium oxide in step (1) comprises Cr₂O₃ and/or CrO₂;
optionally, the doped metal oxide in step (1) comprises any one or a combination of at least two of RuO₂, Nb₂O₄ or ZrO₂.

7. The preparation method according to claim 5 or 6, wherein the grinding in step (1) is ball milling;
optionally, a total mass of grinding balls used in the ball milling is 3-5 times of a total mass of the mixed material;
optionally, the ball milling has a speed of 100-300 rpm;
optionally, the ball milling has a time of 5-10 h;
optionally, the tabletting in step (1) has a pressure of 5-10 MPa.

8. The preparation method according to any one of claims 5 to 7, wherein the roasting in step (2) has a temperature of 700-1000°C;
optionally, the roasting in step (2) has a heating rate of 1-10°C/min;
optionally, the roasting in step (2) has a time of 7-15 h;
optionally, the roasting in step (2) is carried out in an atmosphere of argon, nitrogen or helium;
optionally, the roasting in step (2) is repeated for 2-3 times, and after each roasting, the mixed material is cooled in the furnace, ground and tabletted again.

9. The preparation method according to any one of claims 5 to 8, wherein the preparation method comprises the following steps:
(1) weighing and mixing a sodium salt, a chromium oxide and a doped metal oxide according to a stoichiometric ratio, ball milling and tabletting to obtain an intermediate material; the sodium salt comprises any one or a combination of at least two of Na₂CO₃, NaHCO₃ or NaCl, the chromium oxide comprises Cr₂O₃ and/or CrOz, and the doped metal oxide comprises any one or a combination of at least two of RuO₂, Nb₂O₄ or ZrO₂; a total mass of grinding balls used in the ball milling is 3-5 times of a total mass of the mixed material, and the ball milling has a speed of 100-300 rpm and a time of 5-10 h; the tabletting has a pressure of 5-10 MPa;
(2) roasting the intermediate material obtained in step (1) at 700-1000°C for 7-15 h at a heating rate of 1-10°C/min in an atmosphere of argon, nitrogen or helium to obtain the air-stable layered chromium-based positive electrode material; the roasting is repeated for 2-3 times, and after each roasting, the mixed material is cooled in the furnace, ground and tabletted again.

10. A sodium-ion battery, which has a positive electrode material of the air-stable layered chromium-based positive electrode material according to any one of claims 1 to 4.
